# FASCICULE DE BREVET EUROPEEN

(11) **EP 3 548 304 B1**
(45) Date de publication et mention de la délivrance du brevet: **11.05.2022**
(21) Numéro de dépôt: 17804219.8
(22) Date de dépôt: 30.11.2017
(51) Int. Cl.: B60C 1/00, C08L 9/00, C08L 53/02

(54) **PNEUMATIQUE POURVU D'UN FLANC EXTERNE COMPORTANT UN OU PLUSIEURS ÉLASTOMÈRES THERMOPLASTIQUES ET UN OU PLUSIEURS ÉLASTOMÈRES DIÉNIQUES SYNTHÉTIQUES**
REIFEN MIT EINER ÄUSSEREN SEITENWAND MIT EINEM ODER MEHREREN THERMOPLASTISCHEN ELASTOMEREN UND EINEM ODER MEHREREN SYNTHETISCHEN DIENELASTOMEREN
TYRE PROVIDED WITH AN OUTER SIDEWALL COMPRISING ONE OR MORE THERMOPLASTIC ELASTOMERS AND ONE OR MORE SYNTHETIC DIENE ELASTOMERS

(30) Priorité: 02.12.2016 FR 1661876
(43) Date de publication de la demande: 09.10.2019
(73) Titulaire: Compagnie Générale des Etablissements Michelin, 63000 Clermont-Ferrand (FR)
(72) Inventeur: CHOUVEL, Christophe, 63040 Clermont-Ferrand Cedex 09 (FR)
(74) Mandataire: Bocchi, Brigitte
(86) Numéro de dépôt international: PCT/EP2017/081014
(87) Numéro de publication internationale: WO 2018/100079

(56) Documents cités:
- WO-A1-2013/087485
- US-A1- 2002 037 962
- ESTEBAN CAMAÑO ET AL: "Evaluation of the thermal diffusivity of rubber compounds through the glass transition range", JOURNAL OF APPLIED POLYMER SCIENCE, vol. 63, no. 2, 10 janvier 1997 (1997-01-10), pages 157-162, XP055373144, US ISSN: 0021-8995, DOI: 10.1002/(SICI)1097-4628(19970110)63:2<157: :AID-APP3>3.0.CO;2-U

## Description

La présente invention est relative aux pneumatiques et plus particulièrement aux flancs externes de pneumatiques, c'est-à-dire, par définition, aux couches élastomériques situées radialement à l'extérieur du pneumatique, qui sont en contact avec l'air ambiant.

Il est possible de définir au sein du pneumatique trois types de zones :
- La zone radiale extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche au gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bandes de roulements, des nappes de ceintures de pneumatiques ou toute autre couche qui n'est pas en contact avec l'air ambiant ou le gaz de gonflage du pneumatique.

Le flanc externe peut selon les besoins comporter une ou plusieurs nappes de protection, situées à l'extérieur par rapport à l'armature de carcasse, chargées de protéger le reste de la structure du flanc des agressions externes : chocs, déchirures ou autres perforations.

C'est par exemple le cas dans les flancs de certains pneumatiques destinés à des roulages sur des sols relativement agressifs, par exemple sur des véhicules de tourisme du type rallye ou encore sur des véhicules industriels hors la route du type chantier.

Ces nappes de protection doivent être suffisamment souples et déformables pour d'une part épouser au mieux la forme de l'obstacle sur lequel le flanc est susceptible de s'appuyer lors du roulage, et d'autre part s'opposer à la pénétration éventuelle de corps étrangers à l'intérieur de celui-ci. La satisfaction de tels critères nécessite généralement l'utilisation dans ces nappes ou couches de protection de fils de renforcement sous forme de câbles élastiques à torons métalliques combinant une haute élasticité et une énergie à la rupture élevée.

De telles nappes de protection métalliques pour flancs de pneumatiques sont bien connues, elles ont été décrites par exemple dans les brevets ou demandes de brevet FR 1 502 689 (ou US 3 464 477), EP 1 270 273 (ou US 2003/0005993).

Elles présentent toutefois un certain nombre d'inconvénients. Outre le fait qu'elles alourdissent de manière conséquente les flancs des pneumatiques, elles sont constituées de câbles à torons qui sont relativement coûteux, ceci à double titre : d'une part, ces derniers sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

Par conséquent, de telles modifications du flanc externe ne sont pas applicables à des pneumatiques destinés à des véhicules de tourisme.

Néanmoins, la demande des utilisateurs est forte pour disposer de pneumatiques, en particulier destinés à des véhicules de tourisme, qui comportent des flancs résistants aux agressions externes comme les chocs, les déchirures ou autres perforations. Il peut s'agir en particulier des contacts entre le pneumatique et un trottoir qui peuvent endommager fortement, voire perforer le pneumatique.

Par ailleurs, les flancs externes de pneumatiques comprennent généralement une composition de caoutchouc comportant du caoutchouc naturel. Néanmoins, il est connu de l'homme du métier que la résistance à la fissuration des compositions comprenant par exemple un coupage caoutchouc naturel / polybutadiène n'est pas optimale.

Il existe donc un besoin de développer un flanc externe de pneumatique qui soit plus résistant aux agressions extérieures.

De plus, le flanc externe est généralement constitué d'une composition de caoutchouc comprenant majoritairement des élastomères diéniques, par exemple un coupage de caoutchouc naturel et de polybutadiène. De manière connue, cette composition comprend en outre au moins un agent anti-ozonant destiné à réduire la formation et la propagation de craquelures sous des sollicitations statiques et dynamiques prolongées en présence d'ozone, ainsi que des cires, destinées à former un revêtement protecteur à la surface des flancs de sorte à assurer une protection complémentaire sous des sollicitations statiques.

L'association de ces agents anti-ozonants et de ces cires a prouvé son efficacité pour la minimisation des craquelures à la surface des flancs. Malheureusement, les agents anti-ozonants les plus efficaces se caractérisent aussi par une très forte aptitude à migrer à travers le substrat élastomère et à venir tacher et colorer en jaune ou marron les faces externes des flancs. Ce phénomène, connu sous le nom de « tachage » (ou « effleurissement »), peut également se produire également lorsque ces agents anti-ozonants et cires sont présent à des taux relativement élevés.

Il existe donc également un besoin de minimiser ce phénomène, en particulier sans pénaliser les autres propriétés du flanc externe.

Par ailleurs, le document WO 2013/087485 décrit un pneumatique pourvu d'un flanc externe, ledit flanc externe comprenant au moins une composition de caoutchouc comportant au moins, un ou plusieurs élastomères diéniques et un ou plusieurs élastomères thermoplastiques à bloc polyisobutylène. Il est indiqué également qu'un tel pneumatique présente une étanchéité améliorée. L'objectif dudit document n'est donc pas lié à la résolution d'un problème lié à la résistance aux agressions extérieures ni à un besoin de minimiser le phénomène de « tachage ».

Ainsi, l'invention a pour objet un pneumatique pourvu d'un flanc externe, ledit flanc externe comprenant au moins une composition à base d'une matrice élastomérique comprenant :
- un ou plusieurs élastomères thermoplastiques comprenant au moins un bloc élastomère et au moins un bloc thermoplastique, le ou les blocs élastomères ne désignant pas un ou des blocs polyisobutylène ; et
- un ou plusieurs élastomères diéniques synthétiques choisis parmi les polymères butadiéniques ayant une température de transition vitreuse inférieure ou égale à -50°C ;
ladite composition comprenant au moins un système de réticulation et une ou plusieurs charges renforçantes.

Le pneumatique selon l'invention comprenant le flanc externe permet de faire « glisser » l'agresseur extérieur sur le flanc, et en particulier évite la pénétration dans le flanc d'un agresseur extérieur ou au moins minimise la profondeur agressée du flanc lors du frottement de celui-ci sur l'agresseur extérieur.

De plus, ce flanc externe ne comporte pas nécessairement de protection métallique et il est par conséquent plus facile à préparer et de manière plus rapide. Ainsi, les coûts de revient du pneumatique selon l'invention sont réduits par rapport à des pneumatiques comprenant des flancs comprenant une protection métallique.

Enfin, dans le cas où le flanc externe ne comporte pas de protection métallique, il est plus souple, ce qui améliore la perception de confort pour l'utilisateur par rapport à un flanc comprenant des protections métalliques.

L'invention a également pour objet un procédé pour préparer une composition pour la fabrication de pneumatiques tels que définis ci-dessus, comprenant les étapes suivantes :
- incorporer à la matrice élastomérique, au cours d'une première étape, la ou les charges renforçantes, en malaxant thermomécaniquement le tout, en une ou plusieurs fois, jusqu'à atteindre une température maximale T₁ comprise entre 110°C et 190°C, puis
- incorporer ensuite, au cours d'une deuxième étape, le système de réticulation et malaxer le tout à une température maximale inférieure à 90°C.

L'invention ainsi que ses avantages seront aisément compris à la lumière de la description et des exemples de réalisations qui suivent.

Dans la présente description, sauf indication expresse différente, tous les pourcentages (%) indiqués sont des pourcentages massiques.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères, c'est-à-dire du poids total du ou des élastomères, qu'ils soient thermoplastiques ou non thermoplastiques, de la matrice élastomérique. Ainsi, un constituant à 60 pce signifiera par exemple 60 g de ce constituant pour 100 g d'élastomère.

Par l'expression « composition à base de » il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Par « bloc polyisobutylène », il faut entendre au sens de la présente invention un bloc composé majoritairement du monomère isobutylène polymérisé. Par majoritairement, on entend un taux pondéral en monomère par rapport au poids total du bloc « polyisobutylène » le plus élevé, et de préférence un taux pondéral de plus de 50%, plus préférentiellement de plus de 75%, et par exemple de plus de 85%.

Par « matrice élastomérique » dans la présente demande, on désigne l'ensemble des élastomères de la composition.

Par élastomère thermoplastique (TPE), on entend, de manière connue, un polymère de structure intermédiaire entre un polymère thermoplastique et un élastomère.

Un élastomère thermoplastique est constitué d'un ou plusieurs segments rigides « thermoplastiques » reliés à un ou plusieurs segments souples « élastomères ».

Ainsi, le ou les élastomères thermoplastiques de la composition du flanc externe utilisable selon l'invention comprennent au moins un bloc élastomère et au moins un bloc thermoplastique.

Typiquement, chacun de ces segments ou blocs contient au minimum plus de 5, généralement plus de 10 unités de base.

Ainsi, une composition dans laquelle une résine ou un polymère thermoplastique et un élastomère sont mélangés ne constitue pas un élastomère thermoplastique au sens de la présente invention.

Dans la présente demande, lorsqu'il est fait référence à la température de transition vitreuse d'un élastomère thermoplastique, il s'agit de la température de transition vitreuse relative au bloc élastomère (sauf indication contraire). En effet, de manière connue, les élastomères thermoplastiques présentent deux pics de température de transition vitreuse (Tg, mesurée selon ASTM D3418), la température la plus basse étant relative à la partie élastomère de l'élastomère thermoplastique, et la température la plus haute étant relative à la partie thermoplastique de l'élastomère thermoplastique. Ainsi, les blocs souples des élastomères thermoplastiques se définissent généralement par une Tg inférieure ou égale à la température ambiante (25°C), tandis que les blocs rigides ont une Tg supérieure ou égale à 80°C. Pour être de nature à la fois élastomère et thermoplastique, l'élastomère thermoplastique doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Préférentiellement, le ou les élastomères thermoplastiques utilisables selon l'invention (donc le ou les blocs élastomères des élastomères thermoplastiques) présentent une température de transition vitreuse qui est inférieure ou égale à -50°C.

De manière préférentielle également, la température de transition vitreuse des élastomères thermoplastiques utilisables selon l'invention est supérieure à -100°C.

La masse moléculaire moyenne en nombre (notée Mn) des élastomères thermoplastiques est préférentiellement comprise entre 30 000 et 500 000 g/mol, plus préférentiellement comprise entre 40 000 et 400 000 g/mol, plus préférentiellement encore entre 50 000 et 300 000 g/mol. En dessous des minima indiqués, la cohésion entre les chaînes d'élastomère des élastomères thermoplastiques, notamment en raison de leur dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en œuvre.

La masse moléculaire moyenne en nombre (Mn) des élastomères thermoplastiques est déterminée de manière connue, par chromatographie d'exclusion stérique (SEC). L'échantillon est préalablement solubilisé dans un solvant adapté à une concentration d'environ 2 g/L ; puis la solution est filtrée sur filtre de porosité 0,45 µm avant injection. L'appareillage utilisé est une chaîne chromatographique « WATERS alliance ». Le volume injecté de la solution de l'échantillon de polymère est de 100 µl. Le détecteur est un réfractomètre différentiel « WATERS 2410 » et son logiciel associé d'exploitation des données chromatographiques est le système « EMPOWER ». Les conditions sont adaptables par l'homme du métier. Par exemple dans le cas des TPE de type COPE, le solvant d'élution est l'hexafluoroisopranol avec du sel de trifluoroacétate de sodium à une concentration de 0,02 M, le débit de 0,5 ml/min, la température du système de 35°C et la durée d'analyse de 90 min. On utilise un jeu de trois colonnes PHENOMENEX en série, de dénominations commerciales « PHENOGEL » (tailles de pores : 10⁵, 10⁴, 10³ A). Par exemple dans le cas des élastomères thermoplastiques styréniques, l'échantillon est préalablement solubilisé dans du tétrahydrofuranne à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 mL/mn, la température du système de 35°C et la durée d'analyse de 90 mn. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn avec Mw masse moléculaire moyenne en poids) du ou des élastomères thermoplastiques est de préférence inférieur à 3 ; plus préférentiellement inférieur à 2, et encore plus préférentiellement inférieur à 1,5.

Les élastomères thermoplastiques utilisables selon l'invention peuvent être des copolymères avec un petit nombre de blocs (moins de 5, typiquement 2 ou 3), auquel cas ces blocs ont de préférence des masses élevées, supérieures à 15 000 g/mol.

Les élastomères thermoplastiques peuvent être également des copolymères avec un grand nombre de blocs (plus de 30, typiquement de 50 à 500) plus petits, auquel cas ces blocs ont de préférence des masses peu élevées, par exemple de 500 à 5000 g/mol, ces élastomères thermoplastiques seront appelés élastomères thermoplastiques multiblocs par la suite.

Selon une première variante, les élastomères thermoplastiques utilisables selon l'invention se présentent sous une forme linéaire.

Dans un premier mode particulier de cette première variante, les élastomères thermoplastiques sont des copolymères diblocs : bloc thermoplastique/bloc élastomère.

Dans un deuxième mode particulier de cette première variante, les élastomères thermoplastiques sont des copolymères triblocs : bloc thermoplastique/bloc élastomère/bloc thermoplastique, c'est-à-dire un bloc élastomère central et un bloc thermoplastique terminal à chacune des deux extrémités du bloc élastomère.

Dans un troisième mode particulier de cette première variante, les élastomères thermoplastiques sont constitués d'un enchaînement linéaire de blocs élastomères et de blocs thermoplastiques (élastomères thermoplastiques multiblocs).

Selon une deuxième variante, les élastomères thermoplastiques utilisables selon l'invention se présentent sous une forme étoilée à au moins trois branches.

Par exemple, les élastomères thermoplastiques peuvent alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une troisième variante, les élastomères thermoplastiques utilisables selon l'invention se présentent sous une forme branchée ou dendrimère. Les élastomères thermoplastiques peuvent alors se composer d'un bloc élastomère branché ou dendrimère et d'un bloc thermoplastique, situé à l'extrémité des branches du bloc élastomère dendrimère.

Comme expliqué précédemment, le ou les élastomères thermoplastiques utilisables selon l'invention comprennent au moins un bloc élastomère et au moins un bloc thermoplastique, le ou les blocs élastomères ne désignant pas un ou des blocs polyisobutylène.

Les blocs élastomères des élastomères thermoplastiques utilisables selon l'invention, peuvent être tous les élastomères connus de l'homme de l'art, à l'exception des élastomères thermoplastiques dont le ou les blocs élastomères désignent un ou des blocs polyisobutylène.

On distingue généralement les blocs élastomères saturés des blocs élastomères insaturés.

Par bloc élastomère saturé, on entend que ce bloc comprend essentiellement des motifs ne comprenant pas d'insaturations éthyléniques (c'est-à-dire des doubles liaisons carbone-carbone), c'est à dire que les motifs comprenant des insaturations éthyléniques représentent moins de 15 % en moles par rapport à l'ensemble des motifs du bloc considéré.

Les blocs élastomères saturés sont généralement constitués par la polymérisation de monomères éthyléniques. On peut citer en particulier les blocs polyalkylène, à l'exception des blocs polyisobutylène, tels que les copolymères statistiques éthylènepropylène ou éthylène-butylène. Ces blocs élastomères saturés peuvent aussi être obtenus par hydrogénation de blocs élastomères insaturés.

Il peut aussi s'agir de blocs aliphatiques issus de la famille des polyéthers, des polyesters, ou des polycarbonates. En particulier, les blocs élastomères saturés peuvent notamment être constitués par des polyéthers, notamment les polytétraméthylène glycol (PTMG), les polyéthylènes glycols (PEG).

Selon une variante, les monomères polymérisés pour former un bloc élastomère saturé peuvent être copolymérisés, de manière statistique, avec au moins un autre monomère de manière à former un bloc élastomère saturé. Selon cette variante, la fraction molaire en monomère polymérisé autre qu'un monomère éthylénique, par rapport au nombre total de motifs du bloc élastomère saturé, doit être telle que ce bloc garde ses propriétés d'élastomère saturé. Avantageusement la fraction molaire de cet autre co-monomère peut aller de 0 à 50 %, plus préférentiellement de 0 à 45 % et encore plus préférentiellement de 0 à 40 %.

Par exemple, des diènes conjugués en C₄-C₁₄ peuvent être copolymérisés avec les monomères éthyléniques, les motifs éthyléniques restant majoritaires comme vu ci-dessus.

De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-néopentylbutadiène, le 1,3-cyclopentadiène, le 1,3-cyclohexadiène, le 1-vinyl-1,3-cyclohexadiène et un mélange de ces diènes conjugués, et de préférence, ces diènes conjugués sont choisis parmi l'isoprène et un mélange de diènes conjugués contenant de l'isoprène.

Par bloc élastomère insaturé, on entend que ce bloc est issu au moins en partie de monomères diènes conjugués, ayant un taux de motifs ou unités d'origine diénique (diènes conjugués) qui est supérieur à 15 % en moles.

Quand les blocs élastomères des élastomères thermoplastiques utilisables selon l'invention sont insaturés, ils peuvent être choisis parmi :
a) Tout homopolymère obtenu par polymérisation d'un monomère diène conjugué ayant de 4 à 12 atomes de carbone ;
b) tout copolymère obtenu par copolymérisation d'un ou plusieurs diènes conjugués entre eux ou avec un ou plusieurs composés vinyle aromatique ayant de 8 à 20 atomes de carbone ;
c) un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
d) un copolymère d'isobutène et d'isoprène (caoutchouc diénique butyl), ainsi que les versions halogénés, en particulier chlorées ou bromées, de ce type de copolymère.

A titre de diènes conjugués conviennent notamment l'isoprène, le butadiène-1,3, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, le 1-vinyl-1,3-cyclohexadiène, et un mélange de ces diènes conjugués ; de préférence, ces diènes conjugués sont choisis parmi l'isoprène, le butadiène et un mélange contenant de l'isoprène et/ou du butadiène.

Selon une variante, les monomères polymérisés pour former un bloc élastomère insaturé peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère insaturé, doit être telle que ce bloc garde ses propriétés d'élastomère insaturé. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère premier peut être choisi parmi les monomères éthyléniques tels que l'éthylène, le propylène, le butylène, les monomères de type vinylaromatiques ayant de 8 à 20 atomes de carbone tels que définis ci-après ou encore, il peut s'agir d'un monomère tel que l'acétate de vinyle.

A titre de composés vinylaromatiques conviennent notamment les monomères styréniques, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Ainsi, selon un mode de réalisation préférentiel, le au moins un bloc élastomère peut être un copolymère statistique de type styrènebutadiène (SBR), ce copolymère pouvant être partiellement hydrogéné. Ce bloc SBR possède de préférence une Tg (température de transition vitreuse) mesurée par DSC selon la norme ASTM D3418 de 1999, inférieure à -50°C. De manière bien connue, le bloc SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée. De manière préférentielle, on utilise notamment un bloc SBR ayant une teneur en styrène comprise, par exemple dans un domaine allant de 10 % à 60 % en poids, de préférence de 20 % à 50 % en poids, et pour la partie butadiénique, une teneur en liaisons -1,2 comprise dans un domaine allant de 4 % à 75 % (% molaire), et une teneur en liaisons -1,4 comprise dans un domaine allant de 20 % et 96 % (% molaire).

La détermination du taux d'hydrogénation est réalisée par une analyse RMN. Les spectres sont acquis sur un spectromètre Avance 500 MHz BRUKER équipé d'une Cryosonde 1H-X 5 mm. L'expérience RMN 1H quantitative, utilise une séquence simple impulsion 30° et un délai de répétition de 5 secondes entre chaque acquisition. 64 accumulations sont réalisées. Les échantillons (environ 25 mg) sont solubilisés dans le CS2 environ 1 mL, 100 µl de cyclohexane deutéré sont ajoutés pour faire le lock pendant l'acquisition. Les déplacements chimiques sont calibrés par rapport à l'impureté protonée du CS2 δppm 1H à 7,18 ppm référencé sur le TMS (δppm 1H à 0 ppm). Le spectre RMN 1H permet de quantifier la microstructure par intégration des massifs de signaux caractéristiques des différents motifs :
- Le styrène provenant du SBR et des blocs polystyrène. Il est quantifiable dans la zone des aromatiques entre 6,0 ppm et 7,3 ppm pour 5 protons (en retirant l'intégrale du signal de l'impureté du CS2 à 7,18 ppm).
- Le PB1-2 provenant du SBR. Il est quantifiable dans la zone des éthyléniques entre 4,6 ppm et 5,1 ppm pour 2 protons.
- Le PB1-4 provenant du SBR. Il est quantifiable dans la zone des éthyléniques entre 5,1 ppm et 6,1 ppm pour 2 protons et en supprimant 1 proton du motif PB1-2.
- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8 ppm pour 3 protons.
- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif = Intégrale 1H d'un motif/ Σ(intégrales 1H de chaque motif). Par exemple pour un motif de styrène : %molaire du styrène = (Intégrale 1H du styrène) / (Intégrale 1H du styrène + Intégrale 1H du PB1-2 + Intégrale 1H du PB1-4 + Intégrale 1H du PB1-2 hydrogéné + Intégrale 1H du PB1-4 hydrogéné).

De préférence, dans les élastomères thermoplastiques utiles aux besoins de l'invention, le bloc élastomère SBR est hydrogéné de telle manière qu'une proportion allant de 10 à 50 % molaire des doubles liaisons dans la portion butadiène sont hydrogénées.

De préférence pour l'invention, les blocs élastomères des élastomères thermoplastiques présentent une masse moléculaire moyenne en nombre (« Mn ») allant de 25 000 g/mol à 350 000 g/mol, de préférence de 35 000 g/mol à 250 000 g/mol de manière à conférer aux élastomères thermoplastiques de bonnes propriétés élastomériques et une tenue mécanique suffisante et compatible avec l'utilisation en flanc externe de pneumatique.

De manière particulièrement préférée dans l'invention, le ou les blocs élastomères insaturés sont choisis dans le groupe constitué par les polyisoprènes, les polybutadiènes, les copolymères de styrène et de butadiène, et les mélanges de ces élastomères, ces élastomères étant non hydrogénés ou partiellement hydrogénés.

Comme expliqué précédemment, les élastomères thermoplastiques utilisables selon l'invention comprennent au moins un bloc thermoplastique.

Par bloc thermoplastique, on entend un bloc constitué de monomères polymérisés et ayant une température de transition vitreuse, ou une température de fusion dans le cas des polymères semi-cristallins, supérieure ou égale à 80°C, de préférence variant de 80°C à 250°C, plus préférentiellement variant de 80°C à 200°C, et en particulier variant de 80°C à 180°C.

En effet, dans le cas d'un polymère semi-cristallin, on peut observer une température de fusion supérieure à la température de transition vitreuse. Dans ce cas, on prend en compte pour la définition ci-dessus la température de fusion et non pas la température de transition vitreuse.

Le ou les blocs thermoplastiques peuvent être constitués à partir de monomères polymérisés de diverses natures.

En particulier, le ou les blocs thermoplastiques peuvent être choisis dans le groupe constitué par les polyoléfines (polyéthylène, polypropylène), les polyuréthanes, les polyamides, les polyesters, les polyacétals, les polyéthers (polyoxyde d'éthylène, polyphénylène éther), les polysulfures de phénylène, les polyfluorés (FEP, PFA, ETFE), les polystyrènes, les polycarbonates, les polysulfones, le polyméthylméthacrylate, le polyétherimide, les copolymères thermoplastiques tels que le copolymère acrylonitrile-butadiène-styrène (ABS), et les mélanges de ces polymères.

Le ou les blocs thermoplastiques peuvent également être obtenus à partir des monomères choisis parmi :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthylindène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A: Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Selon une variante de l'invention, les monomères ci-dessus peuvent être copolymérisés avec au moins un autre monomère tant que celui-ci ne modifie pas le caractère thermoplastique du bloc, c'est-à-dire que le bloc a une température de transition vitreuse, ou une température de fusion dans le cas des polymères semi-cristallins, supérieure ou égale à 80°C.

A titre d'illustration, cet autre monomère susceptible de copolymériser avec le monomère polymérisé, peut être choisi parmi les monomères diènes, plus particulièrement, les monomères diènes conjugués ayant de 4 à 14 atomes de carbone, et les monomères de type vinylaromatiques ayant de 8 à 20 atomes de carbone, tels qu'ils sont définis dans la partie concernant le bloc élastomère.

Le ou les blocs thermoplastiques peuvent être choisis parmi les polystyrènes et les polymères comprenant au moins un bloc polystyrène.

Concernant les polystyrènes, ceux-ci sont obtenus à partir de monomères styréniques.

Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans les élastomères thermoplastiques utilisables selon l'invention, est compris entre 5 % et 50 %, préférentiellement compris entre 10 % et 40 %.

La proportion des blocs thermoplastiques dans les élastomères thermoplastiques utilisables selon l'invention est déterminée d'une part par les propriétés de thermoplasticité que doivent présenter les élastomères thermoplastiques.

Le ou les blocs thermoplastiques sont préférentiellement présents dans des proportions suffisantes pour préserver le caractère thermoplastique des élastomères thermoplastiques utilisables selon l'invention. Le taux minimum de blocs thermoplastiques dans les élastomères thermoplastiques peut varier en fonction des conditions d'utilisation des élastomères thermoplastiques.

D'autre part, la capacité des élastomères thermoplastiques à se déformer lors de la préparation du pneu peut également contribuer à déterminer la proportion des blocs thermoplastiques dans les élastomères thermoplastiques utilisables selon l'invention.

De préférence, les blocs thermoplastiques des élastomères thermoplastiques présentent une masse moléculaire moyenne en nombre (« Mn ») allant de 5 000 g/mol à 150 000 g/mol, de manière à conférer aux élastomères thermoplastiques de bonnes propriétés élastomériques et une tenue mécanique suffisante et compatible avec l'utilisation en flanc externe de pneumatique.

De manière particulièrement préférée dans l'invention, le ou les blocs thermoplastiques sont choisis dans le groupe constitué par les polystyrènes, les polyesters, les polyamides, les polyuréthanes, et les mélanges de ces polymères.

De manière tout particulièrement préférée dans l'invention, le ou les blocs thermoplastiques sont choisis dans le groupe constitué par les polystyrènes, les polyesters, les polyamides, et les mélanges de ces polymères.

De manière préférée dans l'invention, le ou les élastomères thermoplastiques sont choisis dans le groupe constitué par les copolymères à blocs styrène/butadiène/styrène (SBS), styrène/isoprène/styrène (SIS), styrène/copolymère butadiène-styrène éventuellement partiellement hydrogéné/styrène (SOE), et les mélanges de ces copolymères.

Plus préférentiellement, le ou les élastomères thermoplastiques sont choisis dans le groupe constitué par les copolymères à blocs styrène/butadiène/styrène (SBS), styrène/copolymère butadiène-styrène éventuellement partiellement hydrogéné/styrène (SOE), et les mélanges de ces copolymères.

Selon une autre variante, le ou les élastomères thermoplastiques sont choisis dans le groupe constitué par les copolymères à blocs styrène/butadiène/styrène (SBS), styrène/isoprène/styrène (SIS), styrène/copolymère butadiène-styrène partiellement hydrogéné/styrène (SOE), et les mélanges de ces copolymères.

De manière particulièrement préférée, le ou les élastomères thermoplastiques sont choisis dans le groupe constitué par les copolymères à blocs styrène/butadiène/styrène (SBS), styrène/copolymère butadiène-styrène partiellement hydrogéné/styrène (SOE), et les mélanges de ces copolymères.

A titre d'exemples d'élastomères thermoplastiques commercialement disponibles et utilisables selon l'invention, on peut citer les élastomères de type SIS commercialisés par Kuraray, sous le nom « Hybrar 5125 », ou commercialisés par Kraton sous le nom de « D 1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (par exemple « Vector 4114 », « Vector 8508 »).

De préférence, la teneur en élastomère(s) thermoplastique(s) comprenant au moins un bloc élastomère et au moins un bloc thermoplastique, le ou les blocs élastomères ne désignant pas un ou des blocs polyisobutylène, dans la composition varie de 1 à 50 pce, de préférence de 5 à 45 pce, plus préférentiellement de 10 à 40 pce, plus préférentiellement encore de 15 à 35 pce.

De manière particulièrement préférée, le ou les élastomères thermoplastiques comprenant au moins un bloc élastomère et au moins un bloc thermoplastique, le ou les élastomères ne désignant pas un ou des blocs polyisobutylène, sont les seuls élastomères thermoplastiques de la matrice élastomérique.

Il est également possible que les élastomères thermoplastiques utilisables selon l'invention soient en mélange avec d'autres élastomères non-thermoplastiques.

Comme expliqué précédemment, la matrice élastomérique utilisable selon l'invention comprend un ou plusieurs élastomères diéniques synthétiques choisis parmi les polymères butadiéniques ayant une température de transition vitreuse inférieure ou égale à - 50°C.

Les élastomères diéniques synthétiques utilisables selon l'invention peuvent avoir toute microstructure qui est fonction des conditions de polymérisation utilisées, notamment de la présence ou non d'un agent modifiant et/ou randomisant et des quantités d'agent modifiant et/ou randomisant employées.

Les élastomères diéniques synthétiques utilisables selon l'invention peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage avec du noir de carbone, on peut citer par exemple des groupes fonctionnels comprenant une liaison C-Sn ou des groupes fonctionnels aminés tels que la benzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973).

Comme autres exemples d'élastomères fonctionnalisés, on peut citer également des élastomères (tels que BR) du type époxydés.

A titre d'élastomère diénique synthétique utilisable dans la composition du flanc externe du pneumatique selon l'invention, conviennent en particulier les polybutadiènes ayant une teneur (% molaire) en unités -1,2 comprise entre 4 % et 80 % ou ceux ayant une teneur (% molaire) en cis-1,4 supérieure à 80 *%*.

Dans l'invention, le ou les élastomères diéniques synthétiques sont choisis dans le groupe constitué par les polybutadiènes (en abrégé "BR").

De préférence, la teneur en élastomères diéniques synthétiques dans la composition utilisable dans le flanc du pneumatique selon l'invention varie de 50 à 99 pce, de préférence de 55 à 95 pce, plus préférentiellement de 60 à 90 pce, plus préférentiellement encore de 65 à 90 pce.

Comme énoncé précédemment, la composition du flanc externe utilisable dans le pneumatique selon l'invention comprend également un système de réticulation.

De préférence, le système de réticulation est à base de soufre ou d'un donneur de soufre.

Par l'expression « système de réticulation à base de », il faut entendre que le système de réticulation comporte un mélange et/ou le produit de réaction des différents constituants utilisés dans le système de réticulation, et en particulier le soufre ou le donneur de soufre, certains de ces constituants de base étant susceptibles de, ou destinés à, réagir entre eux ou avec les autres constituants de la composition du flanc du pneumatique, au moins en partie, lors des différentes phases de fabrication de la composition du flanc du pneumatique.

Le système de réticulation peut être un système de vulcanisation. Dans ce cas, il est préférentiellement à base de soufre ou à base d'un donneur de soufre et d'un accélérateur de vulcanisation, en particulier un accélérateur primaire de vulcanisation.

Parmi les donneurs de soufre on peut citer par exemple les alkyl phénol disulfures (APDS) tel que par exemple le disulfure de para-tertiobutylphénol.

Avantageusement, le taux en soufre ou en donneur de soufre est compris entre 0,5 et 2 pce, de préférence compris entre 0,5 et 1,5 pce, de préférence encore entre 0,5 et 1,4 pce.

On peut utiliser comme accélérateur primaire tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

De manière particulièrement préférée, l'accélérateur primaire de vulcanisation est le N-cyclohexyl-2-benzothiazyle sulfénamide (CBS).

Selon un mode de réalisation particulier de l'invention, le taux en accélérateur(s) de vulcanisation varie de 0,2 à 10 pce, de préférence varie de 0,2 à 7 pce, plus préférentiellement de 0,6 à 2 pce.

Avantageusement, le ratio pondéral soufre ou donneur de soufre / accélérateur de vulcanisation varie de 0,8 à 1,2.

A ce système de vulcanisation viennent optionnellement s'ajouter, divers accélérateurs secondaires ou activateurs de vulcanisation connus tels qu'oxyde de zinc, acide stéarique, dérivés guanidiques (en particulier diphénylguanidine), etc.

Comme mentionné ci-avant, la composition utilisable dans le flanc externe du pneumatique selon l'invention comprend une ou plusieurs charges renforçantes.

En particulier, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

De préférence, la ou les charge(s) renforçante(s) est (sont) du noir de carbone et/ou de la silice, de préférence la charge renforçante est du noir de carbone.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTI) ou 500, comme par exemple les noirs N115, N134, N234, N326, N330, N339, N347, N375, N550 ou encore, selon les applications visées, les noirs de séries plus élevées (par exemple N660, N683, N772), voire même N990.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Avantageusement, la teneur en charge(s) renforçante(s) varie de 5 à 60 pce.

De manière particulièrement préférée, la teneur en charge(s) renforçante(s) varie de 5 à 30 pce.

Dans ce mode préférentiel, le pneumatique présente une faible hystérèse tout en maintenant de bonnes propriétés de rigidité.

Selon un mode de réalisation préférentiel de l'invention, la composition utilisée dans le flanc externe du pneumatique selon l'invention peut comporter également, au moins un agent plastifiant, tel qu'une huile (ou huile plastifiante ou huile d'extension) ou une résine plastifiante dont la fonction est de faciliter la mise en œuvre du flanc externe, particulièrement son intégration dans l'objet pneumatique par un abaissement du module et une augmentation du pouvoir tackifiant.

On peut utiliser tout type de plastifiant qui peut être une résine ou une huile d'extension. La dénomination « résine » est réservée dans la présente demande, par définition connue de l'homme du métier, à un composé qui est solide à température ambiante (23°C), par opposition à un composé plastifiant liquide tel qu'une huile d'extension ou une huile plastifiante. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

Les résines hydrocarbonées sont des polymères bien connus de l'homme du métier, essentiellement à base de carbone et hydrogène, utilisables en particulier comme agents plastifiants dans des compositions élastomériques. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions élastomériques auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, « softening point »), température à laquelle le produit, par exemple sous forme de poudre, s'agglutine. La température de ramollissement d'une résine hydrocarbonée est généralement supérieure d'environ 50 à 60°C à sa valeur de Tg.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme « terpène » regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac », par Kolon sous dénomination « Hikorez » ou par la société Exxon Mobil sous dénomination « Escorez » pour ce qui concerne les résines coupe C5/ styrène ou résines coupe C5/ coupe C9, par la société Struktol sous dénomination « 40 MS » ou « 40 NS » (mélanges de résines aromatiques et/ou aliphatiques).

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un flanc externe de pneumatique.

La masse moléculaire moyenne en nombre (Mn) de l'huile d'extension est déterminée par chromatographie d'exclusion stérique (SEC), l'échantillon étant préalablement solubilisé dans du tétrahydrofuranne à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofuranne, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

Lorsqu'il est utilisé, on préfère que le taux de plastifiant varie de 2 à 60 pce, préférentiellement de 3 à 50 pce, encore plus préférentiellement de 3 à 15 pce. En dessous du minimum indiqué, la présence de plastifiant n'est pas sensible. Au-delà du maximum préconisé, on s'expose à un risque de cohésion insuffisante de la composition.

La composition utilisable dans le flanc externe du pneumatique selon l'invention peut aussi comprendre une charge lamellaire.

L'utilisation optionnelle de charge lamellaire permet avantageusement d'abaisser le coefficient de perméabilité (donc d'augmenter l'étanchéité) de la composition, sans augmenter de façon excessive son module, ce qui permet de conserver la facilité d'intégration du flanc externe dans l'objet pneumatique.

Les charges dites lamellaires (en anglais « platy fillers ») sont bien connues de l'homme du métier. Elles ont été utilisées notamment dans des bandages pneumatiques pour réduire la perméabilité des couches étanches conventionnelles à base de caoutchouc butyl. Elles sont généralement utilisées à des taux relativement faibles, n'excédant pas le plus souvent 1 à 50 pce, soit des taux volumiques variables, notamment de 0,1 à 25 % en volume de composition élastomérique, et de préférence de 1 à 20 % en volume.

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les charges minérales lamellaires à base de silicium et les mélanges de telles charges.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante, cependant il peut être considéré comme une charge semirenforçante (ou partiellement renforçante) dans la mesure où il permet une augmentation du module en traction d'une composition élastomérique dans laquelle il est incorporé.

Ces définitions étant données, on entend plus particulièrement par graphite susceptible d'être utilisé dans les compositions utilisables selon l'invention :
(a) tout graphite naturel, associé aux roches affectées par le métamorphisme, après séparation des impuretés accompagnant les veines de graphite et après broyage ;
(b) tout graphite naturel expansable thermiquement, i.e. dans lequel est intercalé un ou plusieurs composés chimiques à l'état liquide, par exemple un acide, entre ses plans de graphène ;
(c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
(d) tout graphite synthétique obtenu par graphitisation de coke de pétrole.

La composition utilisable dans le flanc externe du pneumatique selon l'invention peut contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non, et sera dans les deux cas assimilé à une charge lamellaire au sens de la présente invention.

On a constaté de façon surprenante que les graphites avec n'importe lequel de ces deux types de morphologie convenaient dans la composition utilisable selon l'invention, cependant les graphites présentant une forme lamellaire conviennent préférentiellement, et d'autant plus lorsqu'ils sont orientés de manière à présenter leur plus grande face perpendiculairement au flux de perméation de gaz.

Lorsqu'il est utilisé, le graphite est présent dans la composition élastomérique à des taux allant de 1 pce à 60 pce, et de préférence entre 5 et 30 pce.

En particulier parmi les charges minérales lamellaires à base de silicium conviennent les phyllosilicates et particulièrement celles comprises dans le groupe constitué par les smectites, le kaolin, le talc, le mica et la vermiculite.

Parmi les phyllosilicates conviennent également pour l'invention, les phyllosilicates fonctionnalisées et en particulier organo-modifiées. Selon un mode de réalisation particulier, la structure organique à laquelle est associée la charge inerte est un tensioactif de formule : -M⁺R³R⁴R⁵- ; où M représente un atome d'azote, de soufre, de phosphore ou de pyridine, et où R³, R⁴, et R⁵ représente un atome d'hydrogène, un groupe alkyle, un groupe aryle ou un groupe allyle, R³, R⁴, et R⁵ étant identiques ou différents.

En particulier, des montmorillonites organo-modifiées conviennent pour l'invention. Ainsi des montmorillonites modifiées avec un tensioactif tel qu'un sel d'ammonium quaternaire dioctadécyldiméthyl-dihydrogéné. Une telle montmorillonite organomodifiée est commercialisée notamment par la Société Southern Clay Products sous la dénomination commerciale : « CLOISITE 6A et 20A ».

D'autres tensioactifs à base de sels d'ammonium quaternaire peuvent être encore utilisés pour modifier les phyllosilicates tels que décrits dans la demande de brevet WO06/047509.

Comme exemples de micas, on peut citer les micas commercialisés par la société CMMP (Mica-MU^{®}, Mica-Soft^{®}, Briomica^{®} par exemple), ceux commercialisés par la société YAMAGUCHI (A51S, A41S, SYA-21R, SYA-21RS, A21S, SYA-41R), les vermiculites (notamment la vermiculite Shawatec^{®} commercialisée par CMMP ou la vermiculite Microlite^{®} commercialisée par W.R. Grace), les micas modifiés ou traités (par exemple, la gamme Iriodin^{®} commercialisée par Merck). Comme exemples de graphites, on peut citer les graphites commercialisés par la société Timcal (gamme Timrex^{®}). Comme exemple de talcs, on peut citer les talcs commercialisés par la société Luzenac.

Les charges inertes précitées, autres que le graphite sont en effet particulièrement intéressantes car elles permettent d'améliorer l'imperméabilité des compositions dans lesquelles elles sont dispersées avec un taux adéquat. Par exemple, lorsqu'elles sont utilisées, leur taux peut varier de 1 pce à 80 pce, et de préférence de 3 à 40 pce.

L'introduction des charges lamellaires dans la composition peut être réalisée selon divers procédés connus, par exemple par mélangeage en solution, par mélangeage en masse dans un mélangeur interne, ou encore par mélangeage par extrusion.

La composition utilisable pour le flanc externe du pneumatique selon l'invention peut comporter par ailleurs les divers additifs usuellement présents dans les flancs externes connus de l'homme du métier. On citera par exemple des charges non renforçantes ou inertes autres que les charges lamellaires précédemment décrites, des plastifiants autres que les huiles d'extension précitées, des agents anti-UV, divers agents de mise en œuvre ou autres stabilisants, ou encore des promoteurs aptes à favoriser l'adhésion au reste de la structure de l'objet pneumatique.

L'invention a également pour objet un procédé pour préparer une composition pour la fabrication de pneumatiques tels que définis ci-dessus, comprenant les étapes suivantes :
- incorporer à la matrice élastomérique, au cours d'une première étape, la ou les charges renforçantes, en malaxant thermomécaniquement le tout, en une ou plusieurs fois, jusqu'à atteindre une température maximale T₁ comprise entre 110°C et 190°C, puis
- incorporer ensuite, au cours d'une deuxième étape, le système de réticulation et malaxer le tout jusqu'à une température maximale inférieure à 90°C.

De manière préférée, la première étape s'effectue dans un mélangeur interne et la deuxième étape s'effectue dans un mélangeur externe.

Ainsi, suite à la première étape, le mélange subit généralement plusieurs passages entre deux rouleaux dont la température est maîtrisée, c'est à dire inférieure à la température de déclenchement de la vulcanisation. La température de cette étape est généralement inférieure à 90°C.

La composition finale ainsi obtenue peut ensuite être calandrée par exemple sous forme d'une feuille, d'une plaque ou encore extrudée, pour former un profilé de flanc externe utilisable dans le pneumatique selon l'invention.

### Méthode de mesure

### Profondeur de stries

Pour mesurer la profondeur de stries, on utilise une éprouvette de flanc de pneumatique de section carrée (côté 15 cm) et d'épaisseur 9 mm obtenue par moulage. La cuisson des éprouvettes est réalisée sous une pression de 16 bars pendant 15 minutes à 170°C. L'éprouvette est montée sur la table d'une machine-outil. Sur le porteoutil de la machine, est fixé un cône en acier dur de 7 mm de long dont l'angle au sommet est de 75°. Pour la réalisation des cônes, le rayon de courbure à l'extrémité est spécifié inférieur à 0,1 mm. Les cônes sont nettoyés avant usage. L'enfoncement du cône depuis le point de premier contact (indentation) est de 5 mm. Après obtention de l'enfoncement souhaité, le cône est mis en mouvement parallèle à la plaque de mélange, à une vitesse de 30 mm par seconde. On relève l'aspect des rayures qui apparaissent à l'arrière du cône par suite du déchirement du mélange, à une distance suffisante, de l'ordre du centimètre, du point de premier enfoncement du cône dans le mélange de manière à ce que la rayure observée ne soit pas affectée par un éventuel phénomène transitoire, et devienne indépendante de la longueur glissée.

Pour comparer le flanc utilisable selon l'invention avec le flanc témoin, on utilise la microscopie confocale pour mesurer la profondeur des rayures. Chaque mesure par microscopie confocale est réalisée en trois points différents (deux sur le caoutchouc à proximité de la rayure et un au fond de la rayure), où celle-ci est suffisamment ouverte pour que la mesure soit réalisable.

Cette mesure de la profondeur de rayure est réalisée en dix emplacements différents de la rayure, puis la moyenne des dix mesures de profondeur est calculée. Pour plus de lisibilité, les résultats seront indiqués en base 100 (pourcentage), la valeur 100 étant attribuée au témoin. Un résultat supérieur à 100 indique une diminution de la valeur concernée.

Ainsi, un pourcentage supérieur à 100% signifie que la rayure est moins profonde que celle du flanc de pneumatique de référence.

### Propriétés dynamiques (module de cisaillement dynamique (G^{∗}) et module de perte (G''))

Les propriétés dynamiques G^{∗} et G'' sont mesurées sur un viscoanalyseur (Metravib V A4000), selon la norme ASTM D 5992 - 96. On enregistre la réponse d'un échantillon de composition vulcanisée voulue (éprouvette cylindrique de 2 mm d'épaisseur et de 78,5 mm² de section), soumis à une sollicitation sinusoïdale en cisaillement simple alterné, à la fréquence de 10Hz, à une température de 23°C et selon la norme ASTM D 1349 - 99. On effectue un balayage en amplitude de déformation crête à crête de 0,1 à 50% (cycle aller), puis de 50% à 1% (cycle retour). Les résultats exploités sont le module complexe de cisaillement dynamique (G^{∗}) et le module de perte (G"). Pour le cycle retour, on indique la valeur de G^{∗} à 20% de déformation, ainsi que la valeur de G'' à 20% de déformation. Pour plus de lisibilité, les résultats seront indiqués en base 100 (pourcentage), la valeur 100 étant attribuée au témoin. Un résultat inférieur à 100 indiquant une augmentation de la valeur concernée, et inversement, un résultat supérieur à 100, indiquera une diminution de la valeur concernée.

Autrement dit, si le module de perte G" baisse, alors le pourcentage relatif à G" augmente. Dans ce cas, l'hystérèse diminue et est donc améliorée.

De même, si le module complexe de cisaillement dynamique G^{∗} baisse, alors le pourcentage relatif à G^{∗} augmente. La rigidité est dans ce cas améliorée.

### Test ozone développé en laboratoire

Pour mesurer la résistance à l'ozone des matériaux, plusieurs lanières d'éprouvette sont tendues à différentes déformations allant de 10% de déformation à 100% de déformation par pas de 10% à partir de 10% de déformation, puis par pas de 5% à partir de 50% de déformation. Au bout de 240 heures d'exposition à une température de 38°C et un taux d'ozone de 40 ppm, la valeur maximum d'extension pour laquelle l'éprouvette n'est pas rompue est prise en compte. Ceci permet un classement des matériaux.

### Exemples

### 1) Préparation des compositions

Une composition utilisable dans un pneumatique comparatif (composition A) et quatre compositions utilisables dans un pneumatique selon l'invention (compositions B, C, D et E) ont été préparées à partir des ingrédients et des teneurs dans le tableau I ci-dessous. Les teneurs sont exprimées en pce.

**Tableau I**

| **Ingrédients** | **A (Comp.)** | **B (Inv.)** | **C (Inv.)** | **D (Inv.)** | **E (Inv.)** |
|---|---|---|---|---|---|
| Caoutchouc butadiène⁽¹⁾ | 65 | 65 | 65 | 65 | 65 |
| Caoutchouc naturel | 35 | - | - | - | - |
| SBS⁽²⁾ | - | 35 | 35 | 35 | 35 |
| Noir de carbone⁽³⁾ | 50 | 50 | 20 | 20 | 20 |
| Huile⁽⁴⁾ | 15 | 15 | 15 | 15 | 15 |
| Antioxydant 1⁽⁵⁾ | 1,5 | 1,5 | 1,5 | 1,5 | 1,5 |
| Antioxydant 2⁽⁶⁾ | 1,5 | 1,5 | 1,5 | 1,5 | - |
| Cire ozone | 1 | 1 | 1 | 1 | 1 |
| Acide stéarique | 1 | 1 | 1 | 1 | 1 |
| Oxyde de zinc | 2,4 | 2,4 | 2,4 | 2,4 | 2,4 |
| Soufre | 1,4 | 1,4 | 1,4 | 0,8 | 1,2 |
| Accélérateur de vulcanisation⁽⁷⁾ | 1,4 | 1,4 | 1,4 | 0,8 | 1,2 |

| | | | | | |
|---|---|---|---|---|---|
| (1) BR ND ML63, (2) Copolymère bloc comprenant 31% en poids de styrène de série D1101 de la société Kraton, (3) noir de carbone de série N550, de la société Cabot, (4) Huile MES « Catenex SNR » de la société Shell, (5) Antioxydant « Santoflex 6PPD » de la société Solutia, (6) Antioxydant « vulkanox IPPD » de la société Bayer, (7) Accélérateur « Santocure CBS » de la société Solutia. | | | | | |

### 2) Préparation des éprouvettes de flanc externe utilisable dans les pneumatiques selon l'invention

Les composition de flanc externe sont préparées dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale de 140°C, suivie d'une seconde phase de travail mécanique (parfois qualifiée de phase « productive ») à plus basse température de 40°C, phase de finition au cours de laquelle est incorporé le système de réticulation.

Ici, la mise en œuvre des compositions élastomériques est effectuée au moyen d'un mélangeur du type Haake RM 3000 de 360 cm³ avec des palettes de type CAM.

La préparation des éprouvettes de flanc externe est réalisée dans un mélangeur interne.

Après refroidissement du mélange ainsi obtenu au cours de la première phase non-productive, on incorpore alors le système de réticulation à 40°C, dans un mélangeur externe à cylindres ; le tout est alors mélangé (phase productive) pendant quelques minutes, par exemple entre 2 et 15 min, ici 10 minutes.

L'éprouvette de flanc externe de pneumatique comprenant la composition A est appelée flanc A. Les éprouvette de flanc externe de pneumatique comprenant respectivement les compositions B, C, D et E sont appelées respectivement flancs B, C, D et E.

### 3) Résultats

Les résultats sont rassemblés dans le tableau II ci-dessous. Il est à noter que les modules G'' et G^{∗} du flanc B n'ont pas été mesurés, et que la profondeur de stries du flanc E n'a pas été mesurée.

**Tableau II**

| **Flanc** | **A (Comp.)** | **B (Inv.)** | **C (Inv.)** | **D (Inv.)** | **E (Inv)** |
|---|---|---|---|---|---|
| Strie (%) | 100 | 132 | 216 | 271 | - |
| Module G'' (%) | 100 | - | 114 | 158 | 154 |
| Module G^{∗} (%) | 100 | - | 101 | 96 | 114 |
| Valeur maximum d'extension (%) | 15 | - | - | 35 | 15 |

On peut constater que les pneumatiques selon l'invention pourvus des flancs B, C et D présentent une résistance à l'agression améliorée par rapport au pneumatique de référence pourvu du flanc A. En outre, les pneumatiques selon l'invention pourvus des flancs C, D et E présentent une diminution de l'hystérèse par rapport au pneumatique de référence tout en autorisant des propriétés dynamiques (la rigidité G^{∗}) conformes avec une utilisation en pneumatiques.

De plus, le pneumatique pourvu du flanc D présente une résistance à l'ozone améliorée par rapport au pneumatique de référence pourvu du flanc A.

Par ailleurs, il est intéressant de noter que le pneumatique pourvu du flanc E présente une résistance à l'ozone équivalente à celle du pneumatique de référence pourvu du flanc A alors que la teneur totale en antioxydant dans le flanc E est inférieure à celle dans le flanc A. Le phénomène d'effleurissement est donc minimisé.

Cette résistance à l'ozone équivalente est d'autant plus intéressante que l'hystérèse et les propriétés dynamiques sont conformes avec une utilisation en pneumatiques.

## Revendications

1. Pneumatique pourvu d'un flanc externe, ledit flanc externe comprenant au moins une composition à base d'une matrice élastomérique comprenant :
- un ou plusieurs élastomères thermoplastiques comprenant au moins un bloc élastomère et au moins un bloc thermoplastique, le ou les blocs élastomères ne désignant pas un ou des blocs polyisobutylène ; et
- un ou plusieurs élastomères diéniques synthétiques choisis parmi les polymères butadiéniques ayant une température de transition vitreuse inférieure ou égale à -50°C, choisis dans le groupe constitué par les polybutadiènes ;
ladite composition comprenant au moins un système de réticulation et une ou plusieurs charges renforçantes.

2. Pneumatique selon la revendication 1, **caractérisé en ce que** le ou les blocs élastomères ont une température de transition vitreuse inférieure ou égale à -50°C.

3. Pneumatique selon la revendication 1 ou 2, **caractérisé en ce que** le ou les blocs élastomères des élastomères thermoplastiques sont insaturés et sont choisis parmi :
a) tout homopolymère obtenu par polymérisation d'un monomère diène conjugué ayant de 4 à 12 atomes de carbone ;
b) tout copolymère obtenu par copolymérisation d'un ou plusieurs diènes conjugués entre eux ou avec un ou plusieurs composés vinyle aromatique ayant de 8 à 20 atomes de carbone ;
c) un copolymère ternaire obtenu par copolymérisation d'éthylène, d'une α-oléfine ayant de 3 à 6 atomes de carbone avec un monomère diène non conjugué ayant de 6 à 12 atomes de carbone ;
d) un copolymère d'isobutène et d'isoprène, ainsi que les versions halogénés.

4. Pneumatique selon la revendication 3, **caractérisé en ce que** le ou les blocs élastomères insaturés des élastomères thermoplastiques sont choisis dans le groupe constitué par les polyisoprènes, les polybutadiènes, les copolymères de styrène et de butadiène, et les mélanges de ces élastomères, ces élastomères étant non hydrogénés ou partiellement hydrogénés.

5. Pneumatique selon l'une quelconque des revendications précédentes, **caractérisé en ce que** le ou les blocs thermoplastiques des élastomères thermoplastiques sont choisis dans le groupe constitué par les polyoléfines, les polyuréthanes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et les mélanges de ces polymères, de préférence choisis dans le groupe constitué par les polystyrènes, les polyesters, les polyamides, les polyuréthanes, et les mélanges de ces polymères, et plus préférentiellement choisis parmi les polystyrènes, les polyesters, les polyamides, et les mélanges de ces polymères.

6. Pneumatique selon l'une quelconque des revendications précédentes, **caractérisé en ce que** le ou les élastomères thermoplastiques sont choisis dans le groupe constitué par les copolymères à blocs styrène/butadiène/styrène (SBS), styrène/isoprène/styrène (SIS), styrène/copolymère butadiène-styrène éventuellement partiellement hydrogéné/styrène (SOE), et les mélanges de ces copolymères.

7. Pneumatique selon l'une quelconque des revendications précédentes, **caractérisé en ce que** le ou les élastomères thermoplastiques sont choisis dans le groupe constitué par les copolymères à blocs styrène/butadiène/styrène (SBS), styrène/copolymère butadiène-styrène partiellement hydrogéné/styrène (SOE), et les mélanges de ces copolymères.

8. Pneumatique selon l'une quelconque des revendications précédentes, **caractérisé en ce que** la teneur en élastomère(s) thermoplastique(s) comprenant au moins un bloc élastomère et au moins un bloc thermoplastique, le ou les blocs élastomères ne désignant pas un ou des blocs polyisobutylène, dans la composition varie de 1 à 50 pce, de préférence de 5 à 45 pce, plus préférentiellement de 10 à 40 pce, plus préférentiellement encore de 15 à 35 pce.

9. Pneumatique selon l'une quelconque des revendications précédentes, **caractérisé en ce que** la teneur en élastomère(s) diénique(s) synthétique(s) varie de 50 à 99 pce, de préférence de 55 à 95 pce, plus préférentiellement de 60 à 90 pce.

10. Pneumatique selon l'une quelconque des revendications précédentes, **caractérisé en ce que** le système de réticulation est à base de soufre ou d'un donneur de soufre.

11. Pneumatique selon la revendication 10, **caractérisé en ce que** le taux en soufre ou en donneur de soufre est compris entre 0,5 et 2 pce, de préférence compris entre 0,5 et 1,5 pce, de préférence encore entre 0,5 et 1,4 pce.

12. Pneumatique selon l'une quelconque des revendications précédentes, **caractérisé en ce que** le système de réticulation comprend un ou plusieurs accélérateurs de vulcanisation dont le taux varie de 0,2 à 10 pce, de préférence varie de 0,2 à 7 pce, plus préférentiellement de 0,6 à 2 pce.

13. Pneumatique selon l'une quelconque des revendications précédentes, **caractérisé en ce que** la ou les charge(s) renforçante(s) est (sont) du noir de carbone et/ou de la silice, et de préférence la charge renforçante est du noir de carbone.

14. Pneumatique selon l'une quelconque des revendications précédentes, **caractérisé en ce que** la teneur en charge(s) renforçante(s) varie de 5 à 60 pce, de préférence de 5 à 30 pce.

## Patentansprüche

1. Reifen mit einer Außenflanke, wobei die Außenflanke mindestens eine Zusammensetzung auf Basis einer Elastomermatrix umfasst, die Folgendes umfasst:
- ein oder mehrere thermoplastische Elastomere, umfassend mindestens einen elastomeren Block und mindestens einen thermoplastischen Block, wobei der elastomere Block bzw. die elastomeren Blöcke keinen Polyisobutylenblock bzw. keine Polyisobutylenblöcke bezeichnet bzw. bezeichnen; und
- ein oder mehrere synthetische Dienelastomere, ausgewählt aus Butadien-Polymeren mit einer Glasübergangstemperatur von weniger als oder gleich -50 °C, ausgewählt aus der aus Polybutadienen bestehenden Gruppe;
wobei die Zusammensetzung mindestens ein Vernetzungssystem und mindestens einen oder mehrere verstärkende Füllstoffe umfasst.

2. Reifen nach Anspruch 1, **dadurch gekennzeichnet, dass** der elastomere Block bzw. die elastomeren Blöcke eine Glasübergangstemperatur von weniger als oder gleich -50 °C aufweist bzw. aufweisen.

3. Reifen nach Anspruch 1 oder 2, **dadurch gekennzeichnet, dass** der elastomere Block bzw. die elastomeren Blöcke der thermoplastischen Elastomere ungesättigt und aus den folgenden ausgewählt ist bzw. sind:
a) jedem durch Polymerisation eines konjugierten Dienmonomers mit 4 bis 12 Kohlenstoffatomen erhaltenen Homopolymer;
b) jedem Copolymer, das durch Copolymerisation eines Diens oder mehrerer Diene, die miteinander oder mit einer oder mehreren vinylaromatischen Verbindungen mit 8 bis 20 Kohlenstoffatomen konjugiert sind, erhalten wird;
c) einem ternären Copolymer, das durch Copolymerisation von Ethylen, einem α-Olefin mit 3 bis 6 Kohlenstoffatomen mit einem nicht-konjugierten Dienmonomer mit 6 bis 12 Kohlenstoffatomen erhalten wird; und
d) einem Copolymer von Isobuten und Isopren, sowie den halogenierten Versionen.

4. Reifen nach Anspruch 3, **dadurch gekennzeichnet, dass** der ungesättigte elastomere Block bzw. die ungesättigten elastomeren Blöcke der thermoplastischen Elastomere aus der Gruppe ausgewählt ist bzw. sind, bestehend aus Polyisoprenen, Polybutadienen, Copolymeren von Styrol und Butadien und Gemischen dieser Elastomere, wobei diese Elastomere nicht hydriert oder partiell hydriert sind.

5. Reifen nach einem der vorhergehenden Ansprüche, **dadurch gekennzeichnet, dass** der thermoplastische Block bzw. die thermoplastischen Blöcke der thermoplastischen Elastomere aus der Gruppe ausgewählt ist bzw. sind, die aus Polyolefinen, Polyurethanen, Polyamiden, Polyestern, Polyacetalen, Polyethern, Polyphenylensulfiden, Polyfluorverbindungen, Polystyrolen, Polycarbonaten, Polysulfonen, Polymethylmethacrylat, Polyetherimid, thermoplastischen Copolymeren und Gemischen dieser Polymere besteht, vorzugsweise aus der Gruppe ausgewählt ist bzw. sind, die aus Polystyrolen, Polyestern, Polyamiden, Polyurethanen und Gemischen dieser Polymere besteht, und stärker bevorzugt aus Polystyrolen, Polyestern, Polyamiden und Gemischen dieser Polymere ausgewählt ist bzw. sind.

6. Reifen nach einem der vorhergehenden Ansprüche, **dadurch gekennzeichnet, dass** das thermoplastische Elastomer bzw. die thermoplastischen Elastomere aus der Gruppe ausgewählt ist bzw. sind, die aus Styrol/Butadien/Styrol (SBS)-, Styrol/Isopren/Styrol(SIS)-, Styrol/gegebenenfalls partiell hydriertem Butadien-StyrolCopolymer/Styrol(SOE)-Block-Copolymeren und Gemischen dieser Copolymere besteht.

7. Reifen nach einem der vorhergehenden Ansprüche, **dadurch gekennzeichnet, dass** das thermoplastische Elastomer bzw. die thermoplastischen Elastomere aus der Gruppe ausgewählt ist bzw. sind, die aus Styrol/Butadien/Styrol(SBS)-, Styrol/partiell hydriertem Butadien-Styrol-Copolymer/Styrol(SOE)-Block-Copolymeren und Gemischen dieser Copolymere besteht.

8. Reifen nach einem der vorhergehenden Ansprüche, **dadurch gekennzeichnet, dass** der Gehalt an thermoplastischem Elastomer bzw. thermoplastischen Elastomeren, umfassend mindestens einen elastomeren Block und mindestens einen thermoplastischen Block, wobei der elastomere Block bzw. die elastomeren Blöcke keinen Polyisobutylenblock bzw. keine Polyisobutylenblöcke bezeichnet bzw. bezeichnen, in der Zusammensetzung von 1 bis 50 phr, vorzugsweise von 5 bis 45 phr, stärker bevorzugt von 10 bis 40 phr, noch stärker bevorzugt von 15 bis 35 phr variiert.

9. Reifen nach einem der vorhergehenden Ansprüche, **dadurch gekennzeichnet, dass** der Gehalt an synthetischem Dienelastomer bzw. synthetischen Dienelastomeren von 50 bis 99 phr, vorzugsweise von 55 bis 95 phr, stärker bevorzugt von 60 bis 90 phr variiert.

10. Reifen nach einem der vorhergehenden Ansprüche, **dadurch gekennzeichnet, dass** das Vernetzungssystem auf Schwefel oder einem Schwefeldonor basiert.

11. Reifen nach Anspruch 10, **dadurch gekennzeichnet, dass** ein Gehalt an Schwefel oder Schwefeldonor zwischen 0,5 und 2 phr, vorzugsweise zwischen 0,5 und 1,5 phr, ebenfalls bevorzugt zwischen 0,5 und 1,4 phr beträgt.

12. Reifen nach einem der vorhergehenden Ansprüche, **dadurch gekennzeichnet, dass** das Vernetzungssystem einen oder mehrere Vulkanisationsbeschleuniger umfasst, deren Gehalt von 0,2 bis 10 phr, vorzugsweise von 0,2 bis 7 phr, stärker bevorzugt von 0,6 bis 2 phr variiert.

13. Reifen nach einem der vorhergehenden Ansprüche, **dadurch gekennzeichnet, dass** es sich bei dem bzw. den verstärkenden Füllstoff(en) um Ruß und/oder Siliziumdioxid handelt und vorzugsweise der verstärkende Füllstoff Ruß ist.

14. Reifen nach einem der vorhergehenden Ansprüche, **dadurch gekennzeichnet, dass** der Gehalt an verstärkendem Füllstoff bzw. verstärkenden Füllstoffen von 5 bis 60 phr, vorzugsweise von 5 bis 30 phr variiert.

## Claims

1. Tyre having an outer sidewall, said outer sidewall comprising at least one composition based on an elastomeric matrix comprising:
- one or more thermoplastic elastomers comprising at least one elastomer block and at least one thermoplastic block, the elastomer block(s) not denoting one or more polyisobutylene blocks; and
- one or more synthetic diene elastomers selected from butadiene polymers having a glass transition temperature of less than or equal to -50°C; selected from the group consisting of butadiene polymers,
said composition comprising at least one crosslinking system and one or more reinforcing fillers.

2. Tyre according to Claim 1, **characterized in that** the elastomer block(s) have a glass transition temperature of less than or equal to -50°C.

3. Tyre according to Claim 1 or 2, **characterized in that** the elastomer block(s) of the thermoplastic elastomers are unsaturated elastomer block(s) and are selected from:
a) any homopolymer obtained by polymerization of a conjugated diene monomer having from 4 to 12 carbon atoms;
b) any copolymer obtained by copolymerization of one or more conjugated dienes with one another or with one or more vinylaromatic compounds containing from 8 to 20 carbon atoms;
(c) a ternary copolymer obtained by copolymerization of ethylene and of an α-olefin having from 3 to 6 carbon atoms with a non-conjugated diene monomer having from 6 to 12 carbon atoms;
(d) a copolymer of isobutene and of isoprene, and also the halogenated versions.

4. Tyre according to Claim 3, **characterized in that** the unsaturated elastomer block(s) of the thermoplastic elastomers are selected from the group consisting of polyisoprenes, polybutadienes, styrene/butadiene copolymers, and mixtures of these elastomers, these elastomers being non-hydrogenated or partially hydrogenated.

5. Tyre according to any one of the preceding claims, **characterized in that** the thermoplastic block(s) of the thermoplastic elastomers are selected from the group consisting of polyolefins, polyurethanes, polyamides, polyesters, polyacetals, polyethers, polyphenylene sulfides, polyfluorinated compounds, polystyrenes, polycarbonates, polysulfones, polymethyl methacrylate, polyetherimide, thermoplastic copolymers, and mixtures of these polymers, preferably selected from the group consisting of polystyrenes, polyesters, polyamides, polyurethanes, and mixtures of these polymers, and preferably selected from polystyrenes, polyesters, polyamides, and mixtures of these polymers.

6. Tyre according to any one of the preceding claims, **characterized in that** the thermoplastic elastomer(s) are selected from the group consisting of styrene/butadiene/styrene (SBS) block copolymers, styrene/isoprene/styrene (SIS) block copolymers, styrene/optionally partially hydrogenated butadiene-styrene copolymer/styrene (SOE) block copolymers, and mixtures of these copolymers.

7. Tyre according to any one of the preceding claims, **characterized in that** the thermoplastic elastomer(s) are selected from the group consisting of styrene/butadiene/styrene (SBS) block copolymers, styrene/optionally partially hydrogenated butadiene-styrene copolymer/styrene (SOE) block copolymers, and mixtures of these copolymers.

8. Tyre according to any one of the preceding claims, **characterized in that** the content of thermoplastic elastomer(s) comprising at least one elastomer block and at least one thermoplastic block, the elastomer block(s) not denoting one or more polyisobutylene block(s), in the composition ranges from 1 to 50 phr, preferably from 5 to 45 phr, more preferentially from 10 to 40 phr, even more preferentially from 15 to 35 phr.

9. Tyre according to any one of the preceding claims, **characterized in that** the content of synthetic diene elastomer(s) ranges from 50 to 99 phr, preferably from 55 to 95 phr, more preferentially from 60 to 90 phr.

10. Tyre according to any one of the preceding claims, **characterized in that** the crosslinking system is based on sulfur or a sulfur donor.

11. Tyre according to Claim 10, **characterized in that** the content of sulfur or sulfur donor is between 0.5 and 2 phr, preferably between 0.5 and 1.5 phr, more preferably between 0.5 and 1.4 phr.

12. Tyre according any one of the preceding claims, **characterized in that** the content of vulcanization accelerator(s) ranges from 0.2 to 10 phr, preferably ranges from 0.2 to 7 phr, more preferentially from 0.6 to 2 phr.

13. Tyre according to any one of the preceding claims, **characterized in that** the reinforcing filler(s) is (are) carbon black and/or silica, and preferably the reinforcing filler is carbon black.

14. Tyre according to any one of the preceding claims, **characterized in that** the content of reinforcing filler(s) ranges from 5 to 60 phr and preferably from 5 to 30 phr.
